# EUROPEAN PATENT APPLICATION

(11) **EP 3 441 646 A1**
(43) Date of publication of application: **13.02.2019**
(21) Application number: 17185724.6
(22) Date of filing: 10.08.2017
(51) Int. Cl.: F16H 61/04, F16H 61/06

(54) **A METHOD FOR OPERATING A VEHICLE TRANSMISSION TO OVERCOME A TOOTH BUTT SITUATION**

(71) Applicant: Perkins Engines Company Limited, Eastfield, Peterborough PE1 5FQ (GB)
(72) Inventor: BEYER, Michael1, Chillicothe, IL 61523 (US); DRANEY, Erik, Germantown, IL 61548 (US); STUTZMANN, Kevin, Princeville, IL 61559 (US); CRONIN, Michael, Peoria, IL 61615 (US); SPENCER, Steven, Germantown Hills, IL 61548 (US)
(74) Representative: Murgitroyd & Company

(57) **Abstract**

A method of operating a transmission of a vehicle drive train is provided. The transmission comprises at least one interlocking shift element and at least one frictional shift element. The method comprises receiving a command (200) for the at least one interlocking shift element to move to an engaged position, and applying a first pressure of fluid (202) to the at least one interlocking shift element. The first pressure of fluid is less than a maximum engagement pressure. A second pressure of fluid to the at least one frictional shift element is pulsed (204). It is then determined (206) whether the interlocking shift element has moved to the engaged position. The first pressure of fluid is then increased towards the maximum engagement pressure (208) once it has been determined that the shift element is in the engaged position.

## Description

### Field of the Invention

The present invention relates to a continuously variable transmission (CVT) for a vehicle, and more specifically a CVT which comprises at least one interlocking shift element and at least one frictional shift element. The present invention is a method for operating such a transmission.

### Background of the Invention

Automatic and continuously variable transmissions (CVTs) typically comprise at least one planetary gearset and a plurality of shift elements. These shift elements selectively enable or prevent rotation of certain components in the planetary gearset(s), thereby adjusting the gear ratio of the transmission. Automatic transmissions and CVTs are known in which a combination of frictional shift elements and interlocking shift elements are selectively actuated to adjust the gear ratio. One example of a frictional shift element is a friction clutch in which rotating plates are brought in and out of contact with one another so as to transfer energy in the transmission. An example of an interlocking shift element is a dog clutch where one rotating component has projecting teeth and the other rotating component has corresponding recesses into which the teeth are inserted when the rotating elements are brought together. Once the teeth are fully located in the recesses then the dog clutch is engaged.

One drawback of interlocking shift elements such as dog clutches is that it is preferred that the two rotating components have their rotational speeds substantially synchronised before engagement of the teeth and recesses, so as to ensure proper engagement and avoid damage to the engaging components. However, providing synchronisation increases the cost of the transmission, presents packaging issues for the additional components needed, and does not always result in full engagement of the interlocking shift elements in any case. Thus, there is a desire to ensure that the rotating components of an interlocking shift element engage fully without the need for synchronisation first.

US2016/0258530A1 discloses a system and method of ensuring full engagement of an interlocking shift element in a transmission. In the transmission in question an initial synchronising step is employed but the disclosure acknowledges that even after that has taken place the teeth of the first interlocking component may stick only partially engaged in the recesses in the second interlocking component, or indeed may butt against the respective teeth of the second component so that there is no engagement at all. The transmission uses position sensors in order to determine whether or not the shift components are fully engaged, and if not will employ an engagement strategy in order to achieve full engagement. This engagement strategy involves pulsing a pressure of fluid to a frictional brake or clutch in the transmission. This has the effect of adjusting the relative rotational positions of the shift components, thus resulting in the full engagement of the teeth in the recesses as required.

One disadvantage of the method disclosed in US'530 is that the interlocking shift element is supplied with a single, full pressure of fluid when engagement is desired. This means that frictional forces are increased and high forces needed to be applied to the rotational components of the interlocking shift element in order to ensure full engagement. Furthermore, using position sensors to establish the engagement status of the interlocking shift element adds complexity and cost to the transmission.

It is an aim of the present invention to obviate or mitigate one or more of the aforementioned disadvantages.

### Summary of the Invention

According to the present invention there is provided a method of operating a transmission of a vehicle drive train, the transmission comprising at least one interlocking shift element and at least one frictional shift element, the method comprising the steps of:
receiving a command for the at least one interlocking shift element to move to an engaged position;
applying a first pressure of fluid to the at least one interlocking shift element, the first pressure of fluid being less than a maximum engagement pressure;
pulsing a second pressure of fluid to the at least one frictional shift element;
determining whether the interlocking shift element has moved to the engaged position; and
increasing the first pressure of fluid towards the maximum engagement pressure once it has been determined that the shift element is in the engaged position.

### Brief Description of the Drawings

A preferred embodiment of the present invention will now be described, by way of example only, with reference to the following drawings:
Figure 1 is a schematic view of a continuously variable transmission (CVT);
Figure 2 is a flow diagram indicating the control process steps employed when controlling the CVT of figure 1; and
Figure 3 illustrates traces of the pressure of fluid applied to an interlocking shift element and a frictional shift element in the CVT during the control process of figure 2.

### Detailed Description of the Drawings

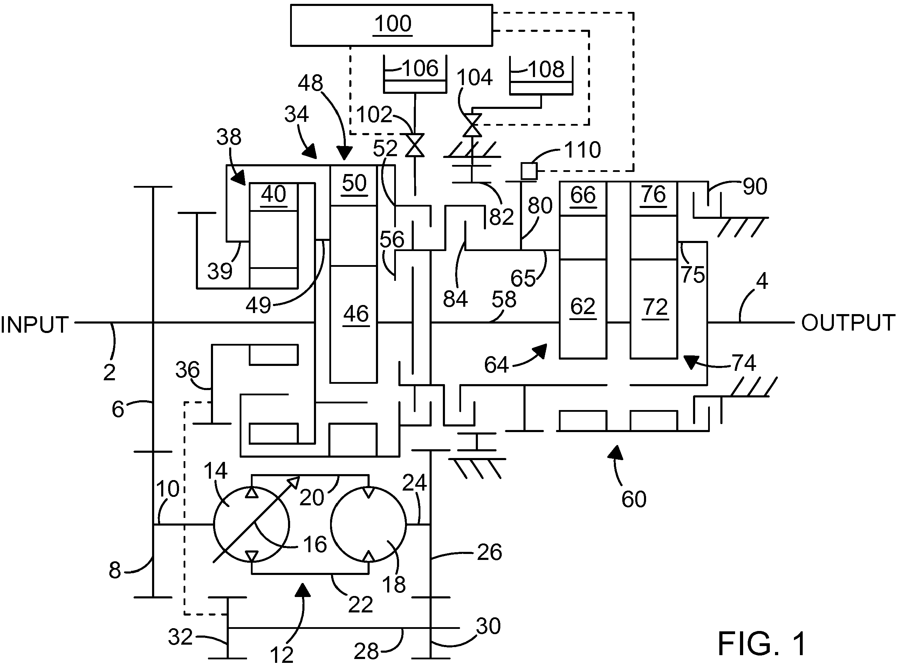

Figure 1 shows in schematic form an example of a CVT to which the control method of the present invention may be applied. However, it should be understood that the methods of the present invention are not intended for application solely with the specific CVT arrangement shown here.

The transmission comprises a transmission input shaft 2 which in use will be connected to a prime mover (e.g. internal combustion engine, electric motor) of a vehicle. The transmission also comprises a transmission output shaft 4 which will be connected to a load (not shown) such as the wheels of the vehicle. The input shaft 2 carries an input gear 6 which is meshed with a first satellite gear 8 which is carried on a variator input shaft 10 which lies in parallel to the input shaft 2. The input shaft 10 drives a hydro-mechanical variator, generally designated 12. The variator 12 comprises a variable-volume pump 14 which is driven by the input shaft 10. The pump 14 has a control element or swash plate 16 of a known type, and is fluidly connected to a hydraulic motor 18 by a pair of hydraulic lines 20,22. The motor 18 is connected to a variator output shaft 24 which carries a variator output gear 26. A layshaft 28 lies parallel to the variator shafts 10,24 and has a first layshaft gear 30 which meshes with the output gear 26, and a second layshaft gear 32 which meshes with a first sun gear 36 of a summing transmission 34.

The summing, or differential, transmission, 34 comprises first and second planetary gear sets 38,48. A first ring gear 40 of the first planetary 38 and a second planet carrier 49 of the second planetary 48 are connected to the input shaft 2 such that rotation of the input shaft 2 rotates these two elements as well. A first planet carrier 39 of the first planetary 38 and a second ring gear 50 of the second planetary 48 are connected to an input side of a first frictional shift element, in the form of low speed clutch 52. A second sun gear 46 of the second planetary 48 is connected to an input side of another frictional shift element: first high speed clutch 56. An intermediate shaft 58 is connected to an output side of the first low speed clutch 52 and the first high speed clutch 56. The intermediate shaft 58 is co-axial with the input and output shafts 2,4.

The first low and high speed clutches 52,56 selectively connect the summing transmission 34 with an output, or range, transmission 60 such that the transmissions 34,60 are co-axial with one another. Both the clutches 52,56 are located in a connecting space defined between the summing and output transmissions 34,60. As stated above, the input side of each of the low and high speed clutches 52,56 is connected to at least one element of the summing transmission 34. An output side of each of the first low and high speed clutches 52,56 is connected to the intermediate shaft 58, which is co-axial with the transmission input and output shafts 2,4. The output transmission 60 comprises third and fourth planetary gear sets 64,74 whose respective third and fourth sun gears 62,72 are both connected to the intermediate shaft 58. A third planet carrier 65 of the third planetary 64 is connected to a reverse gear 80, which can be engaged by way of an interlocking shift element, which here takes the form of dog clutch 82.

As well as being selectively connected to the intermediate shaft 58, the first low and high speed clutches 52,56 are also selectively connected to the input side of a yet further frictional shift element: second high speed clutch 84. The second high speed clutch 84 is located in the connecting space with the first low and high speed clutches 52,56 and has an output side connected to the third planet carrier 65. Thus, when the second high speed clutch 84 is engaged the third sun and planet gears of the third planetary 64 are locked together and will rotate as one.

Third and fourth ring gears 66,76 of the third and fourth planetaries 64,74 are connected to one another and a second low speed clutch, or braking element, 90. When the second low speed clutch 90 is engaged the third and fourth ring gears 66,76 are prevented from rotating. A fourth planet carrier 75 of the fourth planetary 74 is connected to the output shaft 4.

Control components for controlling the method of the present invention are also shown in figure 1. A controller, or electronic control unit, 100 is in communication with first and second control valves 102,104, which are preferably both solenoid valves. These control valves 102,104 control the flow of hydraulic fluid from respective first and second fluid reservoirs 106,108 to the frictional shift element (first low speed clutch 52) and the interlocking shift element (dog clutch 82) for the engagement and disengagement thereof. Whilst each shift element has a separate fluid reservoir in the illustrated embodiment there may instead be a single reservoir supplying fluid to both shift elements.

The controller may include a timer and a random access memory (RAM), and may also be in communication with an intermediate speed sensor 110 which measures the rotational speed of one side of the dog clutch 82. This allows the controller 100 to determine the speed differential across the dog clutch 82.

### Industrial Applicability

As described above, the interlocking shift element employed in the exemplary CVT is the dog clutch 82 provided for reverse gear 80. The dog clutch comprises first and second engaging components, the former having a plurality of teeth which are intended to locate in a corresponding plurality of recesses in the latter when the engaging components are engaged.

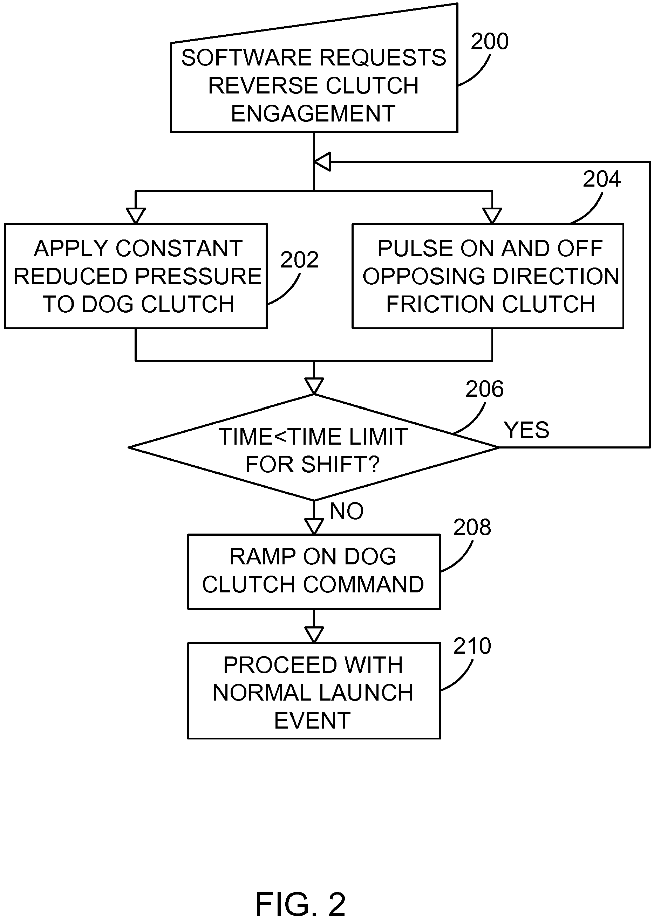

Figure 2 illustrates the process steps undertaken in the control method in order to fully engage reverse gear via the interlocking shift element. Firstly, the controller 100 receives a signal that reverse gear has been selected by an operator of the vehicle. At step 200 in the method the controller then sends a command to the second control valve 104 associated with the interlocking shift element 82 so that the second control valve 104 partially opens. At step 202 of the method the controller instructs the second control valve 104 to maintain the partially open position such that a first pressure of fluid is constantly applied to the interlocking shift element 82, where that first pressure of fluid is less than a maximum engagement pressure. The first pressure of fluid is sufficient to overcome any biasing forces which may bias the engaging components of the interlocking shift element 82 away from one another. However, the first pressure of fluid is not large enough that it increases the forces which must be overcome when seeking to index one or both of the engaging components if they fail to engage fully with one another.

At the same time as step 202, the method also applies step 204 where the controller 100 sends pulse commands to the first control valve 102 associated with the frictional shift element, which preferably is the first low speed clutch 52. However, the first high speed clutch 56 may be used as the frictional shift element instead, wherein the first control valve would be located accordingly.

The pulse commands result in the first control valve 102 opening and closing a number of times. As the first control valve 102 opens and closes, a second pressure of fluid is applied to the frictional shift element 52, which results in the closing and opening of the frictional shift element 52 with each pressure pulse. By pulsing the frictional shift element 52 between closed and open states this will adjust the relative rotational positions of teeth and recesses of the respective engaging components of the interlocking shift element 82. Consequently if the teeth of the first engaging component are only partially engaged in the recesses of the second engaging component, or are not engaged at all and are instead butting against the teeth of the second engaging component, then this relative rotation of the first and second engaging components will ensure the proper engagement of the teeth of the former in the recesses of the latter.

Determination step 206 then determines whether or not the interlocking shift element 82 has moved to an engaged position. In the preferred embodiment illustrated in figure 2 this determination step 206 comprises having the timer in the controller 100 measure the time period T_{M} since command step 200 was issued, with the controller 100 then comparing that measured time T_{M} with a time limit T_{L} stored in the RAM. The time limit T_{L} is the time within which the interlocking shift element should be fully engaged. If determination step 206 determines that the interlocking shift element 82 is not fully engaged, which in this example is where T_{M} < T_{L}, then the method will repeat steps 202 and 204 until it is established that T_{M} = T_{L}. In other words, the below maximum first pressure of fluid will continue to be applied to the interlocking shift element 82, and the second pressure of fluid will continue to be pulsed to the frictional shift element 52. When T_{M} = T_{L} determination step 206 considers the interlocking shift element 82 to be fully engaged.

As an alternative to using time measurement for the determination step, the controller 100 may instead use the speed differential across the dog clutch 82. One way of achieving this is for the controller 100 to receive speed signals from the intermediate speed sensor 110 regarding the speed of one side of the dog clutch 82. One side of the dog clutch will be stationary so the controller 100 is informed of the speed of the rotating side of the dog clutch by the intermediate speed sensor 110. When the rotating side of the dog clutch reaches zero speed such that there is a zero speed differential across both sides of the dog clutch the controller 100 determines that the interlocking shift element 82 is fully engaged. The speed comparison may also be employed as an additional parameter along with the time measurement in the determination step of the method. The sensor 110 may be on the rotating side of the dog clutch or else it may be located at another location on the output transmission 60.

Once determination step 206 has established that the interlocking shift element 82 is fully engaged the controller 100 then sends a signal at step 208 to the second control valve 104 to open fully. This results in an increase in the first pressure of fluid being applied to the interlocking shift element 82 so that the first pressure increases to the maximum engagement pressure.

Following step 208, the controller 100 applies step 210 of the control method, with the controller moving into a launch event control mode now that the interlocking shift element 82 is fully engaged.

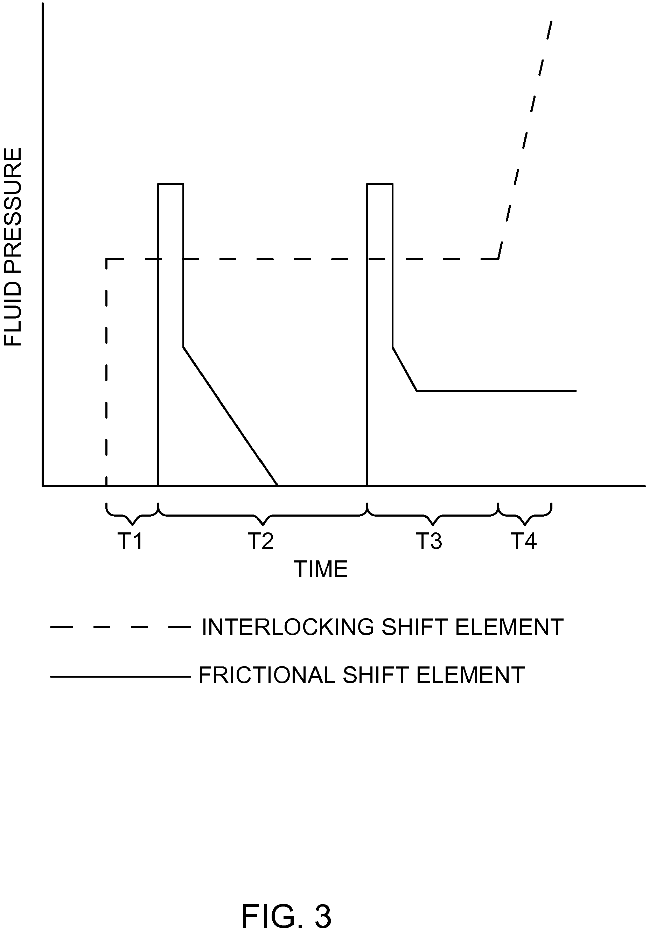

Figure 3 shows traces of exemplary pressures of fluid which may be applied to the interlocking shift element 82 and the frictional shift element 52 in the CVT during the control process described above, over time periods T1-T4. The start of the first time period T1 is the time at which step 202 of the control method is initiated. Hence, this is the point at which the second control valve 104 is moved to the partially open position such that a first pressure of fluid is applied to the interlocking shift element 82, where that first pressure of fluid is less than a maximum engagement pressure. The trace for this first pressure of fluid is the dotted line in figure 3.

Time period T1 ends and time period T2 begins at the initiation of step 204 of the control method, where the controller 100 sends a first pulse command to the first control valve 102 associated with the frictional shift element 52. The preferred embodiment shown in figure 3 has a pair of pulses, but the control method may employ only one pulse or multiple pulses. As shown by the solid line trace in figure 3, the pulse command leads to the opening and closing of the first control valve 102, briefly applying the second pressure of fluid to the frictional shift element 52 so as to momentarily close the frictional shift element. When the first control valve 102 closes following the pressure pulse, it partially closes immediately and then moves to a completely closed state at a slower rate. As can be seen from the related trace, this two stage closure of the first valve 102 results in the second fluid pressure having a corresponding immediate drop, and then reducing at a slower rate to zero pressure as the valve closes.

Time period T2 ends and time period T3 begins with a second pulse of the second pressure of fluid to the frictional shift element 52. The controller 100 is sending a second pulse command to the first control valve 102 with step 204 still in progress. As with the first pulse command this second pulse command leads to the opening and closing of the first control valve 102, briefly applying the second pressure of fluid to the frictional shift element 52 so as to once again momentarily close the frictional shift element. At the end of the second pulse the first control valve 102 moves towards the closed position, partially closing immediately and then moving towards a closed state at a slower rate. Again, this is reflected in the related trace of the second pressure of fluid, where the second fluid pressure has a corresponding immediate drop, and then briefly reduces at a slower rate. Where the control of the first control valve 102 differs with this second pulse is that the first control valve is held in a partially open state at the end of the pulse rather than closing completely. This results in the second pressure of fluid being held at a constant rate which is not zero.

Whilst the two pressure pulses have been applied to the frictional shift element 52 over time periods T2 and T3 the first pressure of fluid has remained at a constant level below maximum pressure. The end of the third time period T3 marks the point in the control method where step 206 determines that the interlocking shift element 82 has been engaged. As explained above, in the exemplary embodiment of figure 2 this determination comes with a simple time measurement, when the measured time T_{M} equals the predetermined shift completion time, or time limit T_{L}. The fourth time period T4 begins when step 208 of the method increases the first pressure of fluid applied to the interlocking shift element 82 to maximum pressure. At this point the second control valve 104 is opened fully, with the resultant rise in the first fluid pressure as shown in figure 3. The time period T4 thus ends with the first fluid pressure on the interlocking shift element 82 at maximum, and the second fluid pressure on the frictional shift element 52 at a reduced, but not zero, level from which the control method then moves into the launch event control mode at step 210. Alternatively, if this frictional shift element was not to be used for a launch event the second fluid pressure on the frictional shift element 52 would reduce to zero at this point.

The method of the present invention ensures that the interlocking shift element is fully engaged without subjecting it to a maximum pressure of fluid from the initiation of the engagement procedure. Hence, high frictional forces at the interlocking components are avoided and relatively low forces are needed to rotate the components and ensure full engagement. Furthermore, determining that full engagement of the interlocking shift element has occurred based upon time measurement, and/or use of the existing speed sensors on the relevant input and out shafts, means that the added expense and complexity of integrating position sensors into the transmission is unnecessary.

Modifications and improvements may be incorporated without departing from the scope of the present invention.

## Claims

1. A method of operating a transmission of a vehicle drive train, the transmission comprising at least one interlocking shift element and at least one frictional shift element, the method comprising the steps of:
receiving a command for the at least one interlocking shift element to move to an engaged position;
applying a first pressure of fluid to the at least one interlocking shift element, the first pressure of fluid being less than a maximum engagement pressure;
pulsing a second pressure of fluid to the at least one frictional shift element;
determining whether the interlocking shift element has moved to the engaged position; and
increasing the first pressure of fluid towards the maximum engagement pressure once it has been determined that the shift element is in the engaged position.

2. The method of claim 1, wherein the second pressure of fluid is pulsed until it is determined that the interlocking shift element is in the engaged position.

3. The method of either preceding claim, wherein the determination step comprises comparing a time measured since receiving the command with a predetermined time for engagement of the at least one interlocking shift element, such that the increase in the first pressure of fluid only occurs once the measured time equals the predetermined time.

4. The method of either claim 1 or claim 2, wherein the determination step comprises comparing the rotational speed differential across the interlocking shift element.

5. The method of any preceding claim, wherein the step of pulsing a second pressure of fluid to the at least one frictional shift element comprises:
opening a control valve so as to obtain a maximum pressure; and
gradually closing the control valve so as to gradually reduce the second pressure of fluid.

6. The method of claim 5, wherein the step of pulsing a second pressure of fluid to the at least one frictional shift element comprises first and second pulsing steps, wherein the first pulsing step comprises gradually closing the control valve until it is fully closed and the fluid is at a minimum pressure, and wherein the second pulsing step comprises gradually closing the control valve until it reaches an intermediate position such that the second pressure of fluid is greater than the minimum pressure and less than the maximum pressure.
